Europäisches Patentamt

European Patent Office

Office européen des brevets

(11) Numéro de publication : **0 391 773 B1**

(12) **FASCICULE DE BREVET EUROPEEN**

(45) Date de publication du fascicule du brevet :
28.07.93 Bulletin 93/30

(21) Numéro de dépôt : **90400859.6**

(22) Date de dépôt : **29.03.90**

(51) Int. Cl.⁵ : **B62D 3/02**, B62D 5/04

(54) **Dispositif pour l'entraînement en rotation d'un arbre selon deux rapports de démultiplication, notamment pour une colonne de direction de véhicule automobile.**

(30) Priorité : **30.03.89 FR 8904146**

(43) Date de publication de la demande :
**10.10.90 Bulletin 90/41**

(45) Mention de la délivrance du brevet :
**28.07.93 Bulletin 93/30**

(84) Etats contractants désignés :
**DE GB IT**

(56) Documents cités :
**EP-A- 0 174 137**
**EP-A- 0 189 172**
**EP-A- 0 274 361**

(56) Documents cités :
**DE-A- 3 502 577**
**DE-A- 3 721 042**
**DE-C- 958 621**
**US-A- 3 365 977**

(73) Titulaire : **VALEO ELECTRONIQUE**
**12-14, Rue Jean Bart**
**F-78960 Voisins-Le-Bretonneux (FR)**

(72) Inventeur : **Tranchon, Georges**
**18, rue du Docteur Plichon**
**F-94000 Créteil (FR)**

(74) Mandataire : **Martin, Jean-Jacques et al**
**Cabinet REGIMBEAU 26, Avenue Kléber**
**F-75116 Paris (FR)**

## Description

L'invention concerne un dispositif pour l'entraînement en rotation d'un arbre selon deux rapports de démultiplication, et plus spécialement d'une colonne de direction de véhicule automobile, auquel cas le dispositif fait partie de la direction assistée du véhicule.

Il existe déjà de nombreux systèmes développés pour mettre en oeuvre des directions assistées de véhicules automobiles.

D'une façon générale, les systèmes connus sont conçus pour être en service en permanence, et leur action est le plus souvent indépendante de la vitesse du véhicule.

On trouve ainsi de nombreux systèmes hydrauliques, agissant au niveau de l'essieu avant, en général par l'intermédiaire d'un piston actionné par une pompe hydraulique et coopérant avec la crémaillère de la direction du véhicule.

De tels systèmes procurent une assistance à l'effort, avec un couple démultiplié sur la colonne de direction.

Ces systèmes sont performants, mais sont onéreux et impliquent une consommation d'énergie élevée (celle-ci pouvant atteindre 0,8 litre d'essence pour cent kilomètres), de sorte que leur utilisation reste limitée à des véhicules haut de gamme.

De tels systèmes impliquent en outre la présence de capteurs, en général pour l'effort et le sens de rotation du volant, et parfois aussi, quoique plus rarement, pour la vitesse du véhicule lorsque l'on souhaite disposer d'une stratégie de durcissement (ce dernier cas complique naturellement la structure, et augmente encore le coût de fabrication). Pour les deux premières fonctions, on utilise en général un organe commun qui est un tiroir rotatif associé à une barre de torsion.

Ceci explique que les systèmes hydrauliques sont inenvisageables pour des véhicules bas de gamme, pour lesquels on recherche avant tout des systèmes de conception simple, qui soient robustes et économiques à réaliser.

Il existe par ailleurs de nombreux systèmes électriques utilisant un moteur agissant directement soit sur la crémaillère de la direction du véhicule, soit sur la colonne de direction.

De tels systèmes peuvent procurer une assistance à l'effort ou au nombre de tours, mais ils restent relativement onéreux pour être envisagés sur des véhicules bas de gamme.

Ces systèmes impliquent en outre la présence de capteurs, souvent associés à des asservissements complexes.

A la différence des systèmes hydrauliques précités, les systèmes électriques comportent des capteurs différents pour l'effort et pour le sens de rotation du volant ; pour l'effort, il s'agit en général d'une barre de torsion associée à un système de mesure de couple sur un arbre (anneaux déformables, jauges de contraintes, etc...).

De plus, la variation d'assistance en fonction de la vitesse du véhicule est, dans le cas des systèmes électriques, de plus en plus recherchée, essentiellement pour améliorer la sécurité.

Pour illustrer l'état de la technique, on peut en particulier citer le brevet français N° 1 595 813, dans lequel est décrit un mécanisme de direction assistée du type de ceux utilisés il y a une vingtaine d'années.

Ce mécanisme comprend un arbre de direction divisé en deux parties désaxées, qui sont reliées par un train d'engrenages de sorte que la rotation de la première partie fait tourner la deuxième partie, un moteur électrique réversible capable de faire tourner un arbre de sortie dans les deux sens, un deuxième train d'engrenages qui relie l'arbre de sortie du moteur électrique à la deuxième partie de l'arbre de direction de sorte que l'entraînement de cet arbre de sortie en rotation par le moteur électrique assiste la rotation de la deuxième partie de l'arbre de direction, et des moyens servant à commander le fonctionnement du moteur électrique en fonction du couple de réaction qui s'exerce entre les éléments du train d'engrenages qui relie les deux parties de l'arbre de direction.

Un tel mécanisme était très complexe et très onéreux, notamment en raison de la présence de nombreux pignons et de masses basculables, et sa fiabilité était fort douteuse. De plus, la présence d'une colonne de direction coupée et désaxée constituait un inconvénient important. Enfin, il était nécessaire de procéder fréquemment à des réglages du mécanisme, réglages qui étaient souvent très délicats.

Un autre système électrique plus récent est illustré dans le brevet français N° 2 242 009.

Ce mécanisme comprend des moyens détecteurs destinés à détecter un couple de rotation appliqué sur l'arbre et à fournir un signal à la suite de cette détection, et constitués soit par un torsiomètre comprenant une barre de torsion et une jauge de contrainte, soit un dynamomètre piézo-électrique, soit encore un dispositif de détection avec élément déformable en torsion dont une bride inférieure porte deux inverseurs ; il comprend en outre des moyens moteurs (motoréducteur ou moteur électrique) destinés à être sélectivement couplés à l'arbre par un dispositif d'embrayage, ainsi que des moyens de commande (circuit de commande, amplificateur, inverseurs) destinés à commander ces moyens moteurs et le dispositif d'embrayage pour appliquer à l'arbre un couple d'assistance à la suite de la détection d'un couple de rotation exercé sur ledit arbre.

Un tel système est certes avantageux dans la mesure où la colonne de direction n'est pas coupée, où le moteur électrique tourne toujours dans le même sens, et où le mécanisme est débrayable.

Il est en particulier indiqué dans ce brevet un certain nombre de facteurs pouvant être considérés comme avantageux :

- le dispositif d'assistance possède un organe de liaison temporaire sous forme d'un dispositif d'embrayage à commande électrique provoquant la désolidarisation automatique et immédiate de l'équipement et de la colonne de direction en cas de panne de courant ;
- lorsque le dispositif n'est pas utilisé, y compris dans le cas d'une panne de courant, les organes de direction sont aussi libres que sur le véhicule dépourvu d'assistance ;
- le conducteur a toujours le loisir de supprimer l'action de l'assistance, en particulier lorsque son fonctionnement serait désagréable (encombrements urbains, montagne, promenade sur route à faible vitesse).

Cependant, il n'en reste pas moins indispensable de prévoir des asservissements relativement complexes, altérant sensiblement la fiabilité du système (sensibilité aux vibrations, présence de frotteurs sensibles à l'usure), de sorte que la structure reste complexe et le coût de fabrication élevé.

Il est également connu, par le document DE-A-35 02 577 un dispositif d'entraînement en rotation d'un arbre selon deux rapports de démultiplication, comportant un train réducteur épicycloïdal intercalé entre deux portions d'arbre disposées coaxialement et tourillonnant dans un carter fixe formant logement pour ledit train épicycloïdal, ce dernier comprenant un porte-satellites, un pignon central et une couronne, des moyens d'actionnement permettant de coupler la couronne au carter fixe.

L'invention a pour objet de concevoir un dispositif pour l'entraînement d'un arbre selon deux rapports de démultiplication, et plus particulièrement (mais pas nécessairement) d'une colonne de direction de véhicule automobile, dont la structure soit plus simple et plus robuste que celle des systèmes connus rappelés plus haut, notamment de façon à pouvoir être monté sur des véhicules bas de gamme.

L'invention a également pour objet de réaliser un dispositif qui ne soit pas en service en permanence, et qui dépende de façon simple de la vitesse du véhicule lorsque ledit dispositif fait partie de la direction assistée d'un véhicule automobile. En effet, si l'assistance est appréciée à basse vitesse, elle est souvent jugée inutile, voire inopportune, à des vitesses élevées.

L'invention a aussi pour objet de réaliser un dispositif dont la conception permette une adaptabilité aisée à des colonnes de direction existantes.

Il s'agit plus particulièrement d'un dispositif pour l'entraînement en rotation d'un arbre selon deux rapports de démultiplication, notamment d'une colonne de direction d'un véhicule automobile, comportant un train réducteur épicycloïdal intercalé entre deux portions d'arbre disposées coaxialement et tourillonnant dans un carter fixe formant logement pour ledit train épicycloïdal, ledit train épicycloïdal comprenant un porte-satellites, un pignon central, une couronne, et des moyens d'actionnement permettant de coupler la couronne au carter fixe, caractérisé par le fait que ledit porte-satellites est solidaire de la portion d'arbre menante, en ce que ledit pignon central est solidaire de la portion d'arbre menée, en ce que ladite couronne est montée folle sur ladite portion d'arbre menée, lesdits moyens d'actionnement permettant de coupler sélectivement la couronne soit au carter fixe, soit à la portion d'arbre menée, selon un critère prédéterminé.

Selon un mode de réalisation particulier, il est possible de prévoir que le dispositif comporte en outre un moteur solidaire du carter fixe, et dont l'arbre de sortie est accouplé à la portion d'arbre menante, ledit moteur pouvant ainsi procurer, lorsqu'il est actif, une assistance à l'effort.

De préférence alors, l'arbre de sortie du moteur est accouplé au porte-satellites du train réducteur épicycloïdal ; en particulier, l'arbre de sortie du moteur porte un pignon engrènant directement avec une couronne dentée prévue sur la périphérie du porte-satellites.

Il est par ailleurs avantageux de prévoir que le moteur d'assistance à l'effort soit un moteur électrique, dont la commande est couplée à celle des moyens d'actionnement associés à la couronne du train réducteur épicycloïdal, de façon que ledit moteur ne soit actif que lorsque ladite couronne est couplée à la portion d'arbre menée ; selon une possibilité supplémentaire, un système d'embrayage supplémentaire ou équivalent est associé au moteur électrique, de façon à remédier à une inertie trop élevée dudit moteur lorsque celui-ci est inactif.

Selon un mode de réalisation particulier, les moyens d'actionnement sont essentiellement constitués par un électro-aimant solidaire du carter fixe, et un électro-aimant solidaire de la portion d'arbre menée ; en particulier, l'électro-aimant solidaire de la portion d'arbre menée est monté à la périphérie d'une roue solidaire de ladite portion, de façon que les deux électro-aimants soient disposés de part et d'autre d'une extension annulaire prévue sur la périphérie de la couronne du train réducteur épicycloïdal. Il va de soi cependant que l'on pourrait remplacer un électro-aimant par un système mécanique de couplage assurant une fonction équivalente.

En variante, les moyens d'actionnement sont essentiellement constitués par un électro-aimant solidaire du carter fixe, et par un accouplement à dents entre la couronne du train réducteur épicycloïdal alors montée coulissante sur la portion d'arbre menée et une couronne dentée solidaire de ladite portion d'arbre menée.

Avantageusement alors, des moyens de rappel, tels qu'un ressort hélicoïdal, sont associés à la couronne du train réducteur épicycloïdal, tendant à appliquer ladite couronne contre la couronne dentée solidaire de la portion d'arbre menée, de façon que l'assistance soit automatiquement réalisée en mode dégradé. De préférence également, l'accouplement à dents est réalisé par des dentures annulaires axiales, de façon à pouvoir céder par glissement relatif desdites dentures homologues en cas de blocage de la portion menée.

Selon l'invention, il est possible de concevoir que le dispositif d'entraînement en rotation selon deux rapports de démultiplication soit constitué par une pluralité de dispositifs identiques accouplables en série, de façon à autoriser plus de deux démultiplications entre la première portion d'arbre d'entrée et la dernière portion d'arbre de sortie.

Enfin, conformément à une application préférée dans le cadre de la présente invention, le dispositif fait partie de la direction assistée d'un véhicule automobile, dans lequel la portion d'arbre menante est un arbre de direction côté volant et la portion d'arbre menée est un arbre de direction côté roues, et est alors caractérisé par le fait que les moyens d'actionnement agissant sur la couronne du train réducteur épicycloïdal réalisent un couplage sélectif de ladite couronne en fonction de la vitesse du véhicule au regard d'une vitesse faible prédéterminée, de façon à ne réaliser l'assistance que lorsque la vitesse du véhicule est inférieure à cette vitesse faible prédéterminée.

D'autres caractéristiques et avantages de l'invention apparaîtront plus clairement à la lumière de la description qui va suivre et de la planche unique de dessin annexée, concernant des modes de réalisation particuliers, en référence aux figures où :

- la figure 1 est une vue schématique partielle illustrant un dispositif conforme à l'invention, dans lequel aucun moteur électrique n'est utilisé, et dans lequel les moyens d'actionnement associés à la couronne du train planétaire épicycloïdal sont constitués par des électro-aimants ;
- la figure 2 est une vue schématique partielle illustrant une variante du dispositif de la figure précédente, dans laquelle un moteur électrique est prévu pour une assistance supplémentaire à l'effort ;
- la figure 3 est une coupe partielle plus détaillée, illustrant une autre variante, également avec moteur électrique, mais avec un accouplement à dents (la couronne du train réducteur épicycloïdal peut alors coulisser entre ses deux positions axiales de couplage).

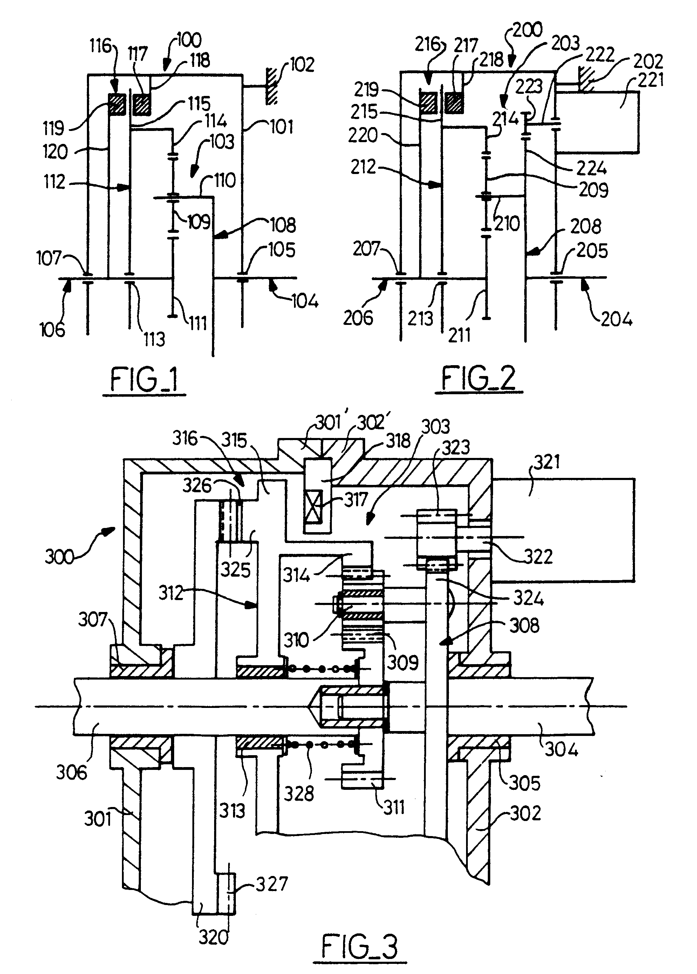

La figure 1 illustre par une vue schématique partielle un dispositif 100 conforme à l'invention.

Ce dispositif a principalement pour objet de réaliser une assistance en fonction de la vitesse d'un véhicule au regard d'une vitesse faible prédéterminée, de sorte que le dispositif 100 est ici utilisé pour l'entraînement en rotation d'une colonne de direction du véhicule, auquel cas le dispositif fait partie de la direction assistée de ce véhicule.

La suite de la description sera faite en référence à cette application particulière, mais il va de soi qu'il ne s'agit cependant que d'une application préférée.

Le dispositif 100 comporte un carter 101 ayant la forme d'un boîtier, fixé au véhicule comme schématisé en 102.

Conformément à un aspect essentiel de l'invention, le dispositif 100 comporte un train réducteur épicycloïdal 103 intercalé entre deux portions d'arbre 104, 106 disposées coaxialement tourillonnant dans le carter fixe 101 formant ainsi logement pour ledit dispositif d'assistance. La portion d'arbre 104 correspond ici à la portion d'arbre menante, pénétrant dans le carter fixe 101 au niveau d'un palier de support 105 ; de même, la portion d'arbre 106 correspond à la portion d'arbre menée qui tourillonne le boîtier 101 par l'intermédiaire d'un palier 107.

Lorsque le dispositif fait partie de la direction assistée d'un véhicule automobile, la portion d'arbre menante 104 est un arbre de direction côté volant, et la portion d'arbre menée 106 est un arbre de direction côté roues : dans ce cas, les portions d'arbre 104 et 106 constituent la colonne de direction du véhicule, et on appréciera que ces portions d'arbre sont alors disposées coaxialement.

Le train réducteur épicycloïdal 103 comprend un porte-satellites 108 solidaire de la portion d'arbre menante 104, et présentant un ou plusieurs axes 110 portant chacun un satellite 109 (il sera en général prévu un ensemble de trois satellites). Le train réducteur épicycloïdal 103 comporte également un pignon central 111 solidaire de la portion d'arbre menée 106, et qui engrène avec le ou les satellites 109. Le train réducteur épicycloïdal 103 comporte enfin une couronne 112, montée folle sur la portion d'arbre menée 106 par l'intermédiaire d'un palier associé 113. Cette couronne 112 présente une portion annulaire dentée intérieurement 114, qui coopère avec le ou les satellites 109, d'une manière classique dans le domaine des trains réducteurs épicycloïdaux.

Conformément à un autre aspect essentiel de l'invention, le dispositif 100 comporte des moyens d'actionnement 116 permettant de coupler sélectivement la couronne 112 du train réducteur épicycloïdal 103 soit au carter fixe 101, soit à la portion d'arbre menée 106, de façon respectivement à réaliser ou à supprimer l'assistance selon un critère prédéterminé.

En l'espèce les moyens d'actionnement 116 sont ici essentiellement constitués par deux électro-aimants 117, 119 : l'électro-aimant 117 est solidaire du carter fixe 101 auquel il est fixé par l'intermédiaire d'une bride de support 118, tandis que l'électro-aimant 119 est solidaire de la portion d'arbre menée 106 par l'intermédiaire d'une roue 120. En fait, l'électro-aimant 119 solidaire de la portion d'arbre menée 106 est monté à la périphérie de la roue 120 solidaire de ladite portion, de façon que les deux électro-aimants 117, 119 soient disposés de part et d'autre d'une extension annulaire 115 de la périphérie de la couronne 112 du train réducteur épicycloïdal 103.

Lorsque l'électro-aimant 119 est alimenté, l'alimentation de l'électro-aimant 117 étant alors coupée, on obtient un couplage entre l'extension annulaire 115 et la roue 120, c'est-à-dire entre la couronne 112 du train réducteur épicycloïdal 103 et l'arbre de direction côté roues 106. La couronne 112 est ainsi bloquée, et la fonction train réducteur supprimée. Les vitesses $\omega_4$ de l'arbre de direction côté volant 104, et $\omega_6$ de l'arbre de direction côté roues 106 sont identiques, et l'assistance n'existe pas.

Au contraire, lorsque l'électro-aimant 117 est alimenté, l'alimentation de l'électro-aimant 119 étant alors coupée, on obtient un couplage entre l'extension annulaire 115 et la bride 118, c'est-à-dire entre la couronne 112 du train réducteur épicycloïdal 103 et le carter fixe 101 du dispositif. La couronne 112 est cette fois bloquée par rapport au carter, de sorte que la vitesse de celle-ci est nulle. La fonction du train réducteur épicycloïdal est alors active, et les vitesses de rotation des arbres de direction 104 et 106 sont différentes, en étant liées entre elles par la formule de Willis : $\omega_6 = \omega_4 (1 + \frac{1}{k})$, formule dans laquelle k est la raison du train réducteur. La vitesse de l'arbre de direction côté roues est ainsi plus élevée que celle de l'arbre de direction côté volant, et on diminue le nombre de tours à effectuer au volant, selon l'assistance recherchée.

Conformément à l'application préférée de l'invention à l'assistance pour l'entraînement en rotation d'une colonne de direction d'un véhicule automobile, il sera avantageux de faire en sorte que les moyens d'actionnement 116 qui viennent d'être décrits agissent sur la couronne 112 du train réducteur épicycloïdal 103 en réalisant un couplage sélectif de ladite couronne en fonction de la vitesse du véhicule au regard d'une vitesse faible prédéterminée, de façon à ne réaliser l'assistance que lorsque la vitesse du véhicule est inférieure à cette vitesse faible prédéterminée, laquelle pourra par exemple être fixée à 10 ou 20 km/h.

Le dispositif 100 qui vient d'être décrit constitue ainsi un système de structure à la fois simple et robuste apportant une aide à la démultiplication. Le couple appliqué sur le volant est ainsi $(1 + \frac{1}{k})$ fois plus important. Avec un train réducteur épicycloïdal 103 tel que celui qui est illustré ici, et comportant trois satellites 109, la raison du train réducteur k sera sensiblement égale à 5.

La figure 2 illustre une variante du dispositif de la figure précédente, dans laquelle un moteur électrique est prévu pour une assistance supplémentaire à l'effort.

Compte tenu du grand nombre de pièces identiques à celles du dispositif de la figure 1, les organes homologues du dispositif 200 illustré en figure 2 seront affectés des mêmes références augmentées de cent.

Le dispositif 200 se différencie du dispositif précédemment décrit par la présence d'un moteur 221 solidaire du carter fixe 201, moteur dont l'arbre de sortie 222 est accouplé à la portion d'arbre menante 204, c'est-à-dire à l'arbre de direction côté volant dans le cas d'une direction assistée de véhicule. Lorsque le moteur 221 intervient, celui-ci est ainsi susceptible de procurer une assistance supplémentaire à l'effort.

Il est en outre avantageux que l'arbre de sortie 222 du moteur 221 soit accouplé au porte-satellites 208 du train réducteur épicycloïdal 203, cet accouplement étant ici réalisé en prévoyant un arbre de sortie 222 qui porte un pignon 223 engrenant directement avec une couronne dentée 224 prévue sur la périphérie du porte-satellites 208.

Le moteur 221 sera avantageusement un moteur électrique, dont la commande est couplée à celle des moyens d'actionnement 216 associés à la couronne 212 du train réducteur épicycloïdal 203, de façon que ledit moteur ne soit actif que lorsque ladite couronne est couplée à la portion d'arbre menée 206. Il sera naturellement possible de prévoir un système d'embrayage supplémentaire ou équivalent (non représenté ici), associé au moteur électrique 221, de façon à remédier à une inertie trop élevée dudit moteur lorsque celui-ci est inactif.

Cette variante est avantageuse dans la mesure où elle permet de réaliser de façon extrêmement simple une assistance à l'effort, particulièrement intéressante lorsque le couple à exercer devient trop important.

Dans le cas d'une direction assistée de véhicule, le moteur électrique 221 est ainsi actif dès que la vitesse du véhicule descend en dessous d'une vitesse faible prédéterminée. Pour ce qui est de l'assistance supplémentaire à l'effort assuré par le moteur électrique 221, il suffira de prévoir un petit moteur dont la puissance est de l'ordre de 100 à 200 Watts, analogue aux moteurs utilisés pour les commandes d'essuie-glace.

La figure 3 est une coupe partielle plus détaillée illustrant une autre variante, également avec moteur électrique, mais comportant un accouplement à dents. Dans ce cas, comme on va le voir, la couronne du train réducteur épicycloïdal peut alors coulisser sur l'arbre de direction côté roues, entre ses deux positions axiales de couplage.

Comme précédemment, le dispositif 300 illustré en figure 3 comporte un certain nombre d'organes identiques à ceux du dispositif 200 précédemment décrit, de sorte que ces organes seront affectés des mêmes références augmentées de cent.

On reconnaît ici le carter fixe, constitué cependant ici de deux demi-carters 301, 302, dans lequel est logé le dispositif proprement dit, notamment le train réducteur épicycloïdal 303. On reconnaît également l'arbre de direction côté volant 304 supporté par un palier 305, et l'arbre de direction côté roues 306 supporté par son palier 307. Le porte-satellites 308 est, comme précédemment, complété par une couronne 324 qui engrène avec le pignon de sortie 323 du moteur 321. Le ou les satellites 309 engrènent d'une part avec le pignon central 311 qui est solidaire de l'arbre de direction côté roues 306, et d'autre part avec la portion dentée 314 de la couronne 312. On constate cependant dans cette variante que la couronne 312 du train réducteur épicycloïdal 303 peut également coulisser librement sur l'arbre de direction côté roues 306, par l'intermédiaire de son palier 313. De plus, la couronne 312 est soumise à l'action d'un ressort hélicoïdal 328 disposé entre celle-ci et le pignon central 311 : ce ressort 328 exerce sur la couronne 312 un effort tendant à ramener constamment celle-ci contre la couronne 320, laquelle, contrairement aux variantes précédentes, présente une denture annulaire axiale 327 qui coopère avec une denture annulaire axiale homologue 326 prévue sur une portion saillante 325 de l'extension 315 de la couronne 312.

Dans le cadre de cette variante, les moyens d'actionnement 316 sont essentiellement constitués par un électro-aimant 317 solidaire du carter fixe 301, 302 (par exemple avantageusement maintenu par serrage de son support 318 entre les deux brides 301', 302' du carter fixe), et par un accouplement à dents 326, 327 entre la couronne 312 du train réducteur épicycloïdal 303, couronne qui est alors montée coulissante sur la portion d'arbre menée 306, et la couronne dentée 320 solidaire de ladite portion d'arbre menée.

Il est intéressant de noter que le ressort hélicoïdal 328 applique la couronne 312 contre la couronne dentée 320 solidaire de la portion d'arbre menée 306, de telle façon que l'assistance est automatiquement réalisée en mode dégradé. En effet, en cas de panne, de rupture de faisceaux, ou de détérioration grave de l'électro-aimant, la couronne 312 est automatiquement rappelée en position d'accouplement à l'arbre de direction côté roues 306, ce qui correspond à une position dans laquelle l'assistance n'existe pas : un tel agencement confère au dispositif une sécurité très intéressante.

Il convient également d'observer que la présence d'un accouplement à dents 326, 327 permet d'éviter la présence de l'électro-aimant mobile qui était utilisé dans les deux variantes précédemment décrites, de sorte qu'il n'est plus nécessaire de prévoir des frotteurs. Ceci constitue encore un avantage important, car tous les organes électriques et alimentés sont alors solidaires du carter fixe.

L'accouplement à dents réalisé par les dentures annulaires axiales 326, 327 est en outre avantageux, dans la mesure où il peut céder par un glissement relatif des dentures homologues en cas de blocage de l'arbre de direction côté roues 306. En effet, dans ce cas, le couple exercé sur le volant produit automatiquement par glissement relatif des dentures homologues, un recul de la couronne 312 contre l'action du ressort de rappel 328. On est ainsi rassuré qu'aucun effort excessif ne peut être exercé sur la colonne de direction.

Le fonctionnement du dispositif 300 est ainsi le suivant :

. lorsque la vitesse du véhicule est supérieure à une vitesse faible prédéterminée (par exemple 10 ou 20 km/h), l'électro-aimant 317 n'est pas alimenté, et la couronne 312 est en prise avec la couronne dentée 320, donc avec l'arbre de direction côté roues 306, et le ressort de rappel 328 assure le maintien dans cette position : il n'y a pas de réduction, et l'assistance n'existe pas ;

. lorsque la vitesse du véhicule atteint la vitesse faible prédéterminée, l'électro-aimant 317 est alors automatiquement alimenté, ce qui produit un désaccouplement de l'ensemble 312, 320, et un blocage de la couronne 312 par rapport au carter fixe 301, 302 : la réduction est donc dans ce cas effective, et l'assistance est réalisée.

Les spécialistes apprécieront que la sécurité est parfaitement assurée avec un tel dispositif, puisque, en cas de panne de courant par exemple, coupant l'alimentation de l'électro-aimant 317, la couronne 312 du train réducteur épicycloïdal 303 est automatiquement ramenée en position d'accouplement par le ressort de rappel associé, assurant ainsi une liaison mécanique sans assistance entre l'arbre de direction côté volant 304 et l'arbre de direction côté roues 306.

Comme précédemment, lorsque l'assistance est effective, la vitesse de sortie $\omega_6$ est plus élevée que la vitesse d'entrée $\omega_4$, mais le couple demandé au niveau du volant est $(1 + \frac{1}{k})$ fois plus important, ce qui peut dans certains cas apparaître inacceptable si l'on exige un confort de conduite élevé.

De ce fait, et comme pour la variante illustrée en figure 2, il est avantageusement prévu un moteur électrique 321 d'assistance supplémentaire à l'effort, lequel n'est alimenté que lorsque l'électro-aimant 317 est lui-même alimenté, c'est-à-dire lorsque l'assistance est effective.

Un capteur de position de volant, non représenté ici, permet alors très simplement de faire tourner le moteur électrique 321 dans le sens désiré.

Il convient enfin de noter le dispositif selon l'invention peut être constitué par une pluralité de dispositifs identiques, accouplables en série, de façon à autoriser plus de deux démultiplications entre la première portion d'arbre d'entrée et la dernière portion d'arbre de sortie. On peut ainsi envisager de disposer plusieurs trains réducteurs à la suite les uns des autres, dont le nombre est choisi en fonction de l'action désirée d'assistance qui doit être procurée par le dispositif global.

Le dispositif qui vient d'être décrit permet ainsi de réaliser aisément une fonction de démultiplication recherchée, et éventuellement une fonction supplémentaire d'assistance en effort, tout en présentant une structure à la fois simple et robuste, ce qui garantit une fiabilité très élevée dans la mesure où l'ensemble du système constitue un tout mécanique, dont le coût de fabrication est considérablement réduit par rapport aux systèmes connus.

Il convient enfin de noter qu'un tel dispositif est aisément adaptable à une colonne de direction existante, sans qu'il soit nécessaire de modifier la conception de cette colonne de direction.

L'invention n'est pas limitée aux modes de réalisation qui viennent d'être décrits, mais englobe au contraire toute variante reprenant, avec des moyens équivalents, les caractéristiques essentielles figurant aux revendications.

## Revendications

1. Dispositif pour l'entraînement en rotation d'un arbre selon deux rapports de démultiplication, notamment d'une colonne de direction d'un véhicule automobile, comportant un train réducteur épicycloïdal (103 ; 203 ; 303) intercalé entre deux portions d'arbre (104 ; 204 ; 304 et 106 ; 206 ; 306) disposées coaxialement et tourillonnant dans un carter fixe (101 ; 201 ; 301, 302) formant logement pour ledit train épicycloïdal, ledit train épicycloïdal comprenant un porte-satellites (108 ; 208 ; 308), un pignon central (111 ; 211 ; 311), une couronne (112 ; 212 ; 312), et des moyens d'actionnement (116 ; 216 ; 316) permettant de coupler la couronne (112 ; 212 ; 312) au carter fixe (101 ; 201 ; 301, 302), caractérisé par le fait que ledit porte-satellites (108 ; 208 ; 308) est solidaire de la portion d'arbre menante (104 ; 204 ; 304), en ce que ledit pignon central (111 ; 211 ; 311) est solidaire de la portion d'arbre menée (106 ; 206 ; 306), en ce que ladite couronne (112 ; 212 ; 312) est montée folle sur ladite portion d'arbre menée, lesdits moyens d'actionnement (116 ; 216 ; 316) permettant de coupler sélectivement la couronne (112 ; 212 ; 312) soit au carter fixe (101 ; 201 ; 301, 302), soit à la portion d'arbre menée (106 ; 206 ; 306), selon un critère prédéterminé.

2. Dispositif selon la revendication 1, caractérisé par le fait qu'il comporte en outre un moteur (221 ; 321) solidaire du carter fixe (201 ; 301, 302), et dont l'arbre de sortie (222 ; 322) est accouplé à la portion d'arbre menante (204 ; 304), ledit moteur pouvant ainsi procurer, lorsqu'il est actif, une assistance à l'effort.

3. Dispositif selon la revendication 2, caractérisé par le fait que l'arbre de sortie (204 ; 304) du moteur (221 ; 321) est accouplé au porte-satellites (208 ; 308) du train réducteur épicycloïdal (203 ; 303).

4. Dispositif selon la revendication 3, caractérisé par le fait que l'arbre de sortie (204 ; 304) du moteur (221 ; 321) porte un pignon (223 ; 323) engrènant directement avec une couronne dentée (224 ; 324) prévue sur la périphérie du porte-satellites (208 ; 308).

5. Dispositif selon l'une des revendications 2 à 4, caractérisé par le fait que le moteur (221 ; 321) est électrique, et sa commande est couplée à celle des moyens d'actionnement (216 ; 316) associés à la couronne (212 ; 312) du train réducteur épicycloïdal (204 ; 303), de façon que ledit moteur ne soit actif que lorsque ladite couronne est couplée à la portion d'arbre menée (206 ; 306).

6. Dispositif selon la revendication 5, caractérisé par le fait qu'un système d'embrayage supplémentaire ou équivalent est associé au moteur électrique (221 ; 321), de façon à remédier à une inertie trop élevée dudit moteur lorsque celui-ci est inactif.

7. Dispositif selon l'une des revendications 1 à 6, caractérisé par le fait que les moyens d'actionnement (116 ; 216) sont essentiellement constitués par un électro-aimant (117 ; 217) solidaire du carter fixe (101 ; 201), et un électro-aimant (119 ; 219) solidaire de la portion d'arbre menée (106 ; 206).

8. Dispositif selon la revendication 7, caractérisé par le fait que l'électro-aimant (119 ; 219) solidaire de la portion d'arbre menée (106 ; 206) est monté à la périphérie d'une roue (120 ; 220) solidaire de ladite portion, de façon que les deux électro-aimants (117, 119 ; 217, 219) soient disposés de part et d'autre d'une extension annulaire (115 ; 215) prévue sur la périphérie de la couronne (112 ; 212) du train réducteur épicycloïdal (103 ; 203).

9. Dispositif selon l'une des revendications 1 à 6, caractérisé par le fait que les moyens d'actionnement (316) sont essentiellement constitués par un électro-aimant (317) solidaire du carter fixe (301, 302), et par un accouplement à dents (326, 327) entre la couronne (312) du train réducteur épicycloïdal (303) alors montée coulissante sur la portion d'arbre menée (306) et une couronne dentée (320) solidaire de ladite portion d'arbre menée.

10. Dispositif selon la revendication 9, caractérisé par le fait que des moyens de rappel, tels qu'un ressort hélicoïdal (328), sont associés à la couronne (312) du train réducteur épicycloïdal (303), tendant à appliquer ladite couronne contre la couronne dentée (320) solidaire de la portion d'arbre menée, de façon à réaliser automatiquement l'accouplement entre le couronne dentée (320) et la couronne du train réducteur en mode dégradé.

11. Dispositif selon la revendication 9 ou 10, caractérisé par le fait que l'accouplement à dents est réalisé par des dentures annulaires axiales (326, 327), de façon à pouvoir céder par glissement relatif desdites dentures homologues en cas de blocage de la portion menée (306).

12. Dispositif selon l'une des revendications 1 à 11, caractérisé par le fait qu'il est constitué par une pluralité de dispositifs identiques (100 ; 200 ; 300) accouplables en série, de façon à autoriser plus de deux démultiplications entre la première portion d'arbre d'entrée et la dernière portion d'arbre de sortie.

13. Dispositif selon l'une des revendications 1 à 12, faisant partie de la direction assistée d'un véhicule automobile, et dans lequel la portion d'arbre menante est un arbre de direction côté volant et la portion d'arbre menée est un arbre de direction côté roues, caractérisé par le fait que les moyens d'actionnement (116 ; 216 ; 316) agissant sur la couronne (112 ; 212 ; 312) du train réducteur épicycloïdal (103 ; 203 ; 303) réalisent un couplage sélectif de ladite couronne en fonction de la vitesse du véhicule au regard d'une vitesse faible prédéterminée, de façon à ne réaliser une assistance que lorsque la vitesse du véhicule est inférieure à cette vitesse faible prédéterminée.

**Patentansprüche**

1. Einrichtung für den Drehantrieb einer Welle mit zwei Übersetzungsverhältnissen, insbesondere für eine Lenksäule eines Kraftfahrzeugs, enthaltend einen Umlaufreduziergetriebezug (103; 203; 303), eingesetzt zwischen zwei Wellenteilen (104; 204; 304 und 106; 206; 306), die koaxial angeordnet sind und in einem feststehenden Gehäuse (101; 201; 301, 302) rotieren, welches als Aufnahmesitz für den genannten Umlaufgetriebezug dient, wobei der genannte Umlaufgetriebezug einen Satellitenträger (108; 208; 308), ein zentrales Ritzel (111; 211; 311), einen Kranz (112; 212; 312) sowie Betätigungsmittel (116; 216; 316) enthält, die eine Ankopplung des Kranzes (112; 212; 312) an das feststehende Gehäuse (101; 201; 301, 302) erlauben, **dadurch gekennzeichnet**, daß der genannte Satellitenträger (108; 208; 308) fest mit dem Antriebswellenteil (104; 204; 304) verbunden ist, daß das zentrale Ritzel (111; 211; 311) fest mit dem angetriebenen Wellenteil (106; 206; 306) verbunden ist, daß der genannte Kranz (112; 212; 312) lose am genannten angetriebenen Wellenteil angebracht ist, wobei die genannten Betätigungsmittel (116; 216; 316) wahlweise die Ankopplung des Kranzes (112; 212; 312) entweder an das feststehende Gehäuse (101; 201; 301, 302) oder an den angetriebenen Wellenteil (106; 206; 306) nach einem vorher festgelegten Kriterium ermöglichen.

2. Einrichtung nach Anspruch 1, **dadurch gekennzeichnet**, daß sie außerdem einen fest mit dem feststehenden Gehäuse (201; 301, 302) verbundenen Motor (221; 321) aufweist, dessen Ausgangswelle (222; 322) mit dem Antriebswellenteil (204; 304) gekoppelt ist, so daß der genannte Motor im aktiven Zustand die Kraft unterstützt.

3. Einrichtung nach Anspruch 2, **dadurch gekennzeichnet**, daß die Augsganswelle (204; 304) des Motors (221; 321) mit dem Satellitenträger (208; 308) des Umlaufreduziergetriebezugs (203; 303) gekoppelt ist.

4. Einrichtung nach Anspruch 3, **dadurch gekennzeichnet**, daß die Ausgangswelle (204; 304) des Motors (221; 321) ein Ritzel (223; 323) trägt, welches direkt mit einem Zahnkranz (224; 324) in Eingriff gelangt, der an der Peripherie des Satellitenträgers (208; 308) vorgesehen ist.

5. Einrichtung nach einem der Ansprüche 2 bis 4, **dadurch gekennzeichnet**, daß es sich bei dem Motor (221; 321) um einen Elektromotor handelt und daß dessen Steuerung mit derjenigen der Betätigungsmittel (216; 316) gekoppelt ist, die mit dem Kranz (212; 312) des Umlaufreduziergetriebezugs (204; 303) verbunden sind, so daß der genannte Motor nur aktiviert wird, wenn der genannte Kranz an den angetriebenen Wellenteil (206; 306) gekoppelt ist.

6. Einrichtung nach Anspruch 5, **dadurch gekennzeichnet**, daß ein zusätzliches oder gleichwertiges Kupplungssystem mit dem Elektromotor (221; 321) in der Weise verbunden ist, daß ein zu hohes Trägheitsmoment des genannten Motors, wenn dieser nicht aktiviert ist, vermieden wird.

7. Einrichtung nach einem der Ansprüche 1 bis 6, **dadurch gekennzeichnet**, daß die Betätigungsmittel (116; 216) im wesentlichen aus einem Elektromagneten (117; 217) bestehen, der fest mit dem feststehenden Gehäuse (101; 201) verbunden ist, sowie aus einem Elektromagneten (119; 219), der fest mit dem angetriebenen Wellenteil (106; 206) verbunden ist.

8. Einrichtung nach Anspruch 7, **dadurch gekennzeichnet**, daß der fest mit dem angetriebenen Wellenteil (106; 206) verbundene Elektromagnet (119; 219) am Umfang eines fest mit dem genannten Teil verbundenen Rades (120; 220) angebracht ist, so daß sich die beiden Elektromagneten (117, 119; 217, 219) beiderseits einer ringförmigen Verlängerung (115; 215) befinden, die am Kreisumfang des Kranzes (112; 212) des Umlaufreduziergetriebezugs (103; 203) vorgesehen ist.

9. Einrichtung nach einem der Ansprüche 1 bis 6, **dadurch gekennzeichnet**, daß die Betätigungsmittel (316) im wesentlichen aus einem Elektromagneten (317) bestehen, der fest mit dem feststehenden Gehäuse (301, 302) verbunden ist, sowie aus einer Zahnkupplung (326, 327) zwischen dem Kranz (312) des Umlaufreduziergetriebezugs (303), der dann gleitbeweglich am angetriebenen Wellenteil (306) angebracht ist, und einem fest mit dem genannten angetriebenen Wellenteil verbundenen Zahnkranz (320).

10. Einrichtung nach Anspruch 9, **dadurch gekennzeichnet**, daß Rückzugsmittel wie zum Beispiel eine zylindrische Schraubenfeder (328) mit dem Kranz (312) des Umlaufreduziergetriebezugs (303) einhergehen, die dazu neigt, den genannten Kranz an den fest mit dem angetriebenen Wellenteil verbundenen Zahnkranz (320) anzudrücken, so daß es automatisch zu einer Kopplung zwischen dem Zahnkranz (320) und dem Kranz des Reduziergetriebezugs in reduziertem Zustand kommt.

11. Einrichtung nach Anspruch 9 oder 10, **dadurch gekennzeichnet**, daß die Zahnkupplung aus ringförmigen axialen Verzahnungen (326, 327) besteht, so daß sie durch relative Gleitbewegung der genannten entsprechenden Verzahnungen bei einer Blockierung des angetriebenen Teils (306) nachgeben kann.

12. Einrichtung nach einem der Ansprüche 1 bis 11, **dadurch gekennzeichnet**, daß sie aus einer Vielzahl gleicher Vorrichtungen (100; 200; 300) besteht, die in Serie gekoppelt werden können, so daß mehr als zwei Übersetzungsverhältnisse zwischen dem ersten Eingangswellenteil und dem letzten Ausgangswellenteil möglich werden.

13. Einrichtung nach einem der Ansprüche 1 bis 12 als Bestandteil der Servolenkung eines Kraftfahrzeugs, wobei der Antriebswellenteil eine lenkradseitige Lenkwelle und der angetriebene Wellenteil eine radseitige Lenkwelle ist, **dadurch gekennzeichnet**, daß die Betätigungsmittel (116; 216; 316) auf den Kranz (112; 212; 312) des Umlaufreduziergetriebezugs (103; 203; 303) einwirken und eine selektive Kopplung des genannten Kranzes entsprechend der Fahrzeuggeschwindigkeit im Verhältnis zu einer vorher festgelegten geringen Geschwindigkeit bewirkt, so daß eine Servowirkung nur zustandekommt, wenn die Geschwindigkeit des Fahrzeugs unter dieser vorher festgelegten geringen Geschwindigkeit liegt.

## Claims

1. A two-speed shaft drive for driving a shaft in rotation, especially for a motor vehicle steering column, comprising an epicyclic reduction gear train (103; 203; 303) interposed between two shaft portions (104; 204; 304 and 106; 206; 306) disposed coaxially and rotating in a fixed casing (101; 201; 301, 302) defining a housing for the said epicyclic train, the said epicyclic train comprising a planet carrier (108; 208; 308), a sun wheel (111; 211; 311), a crown (112; 212; 312), and actuating means (116; 216; 316) coupling the crown (112; 212; 312) to the fixed casing (101; 201; 301, 302), characterised by the fact that the said planet carrier (108; 208; 308) is fixed to the driving shaft portion (104; 204; 304), in that the said sun wheel (111; 211; 311) is fixed to the driven shaft portion (106; 206; 306), and in that the said crown (112; 212; 312) is mounted loose on the said driven shaft portion, the said actuating means (116; 216; 316) enabling the crown (112; 212; 312) to be coupled selectively, to either the fixed casing (101; 201; 301, 302) or the driven shaft portion (106; 206; 306), according to a predetermined criterion.

2. A shaft drive according to Claim 1, characterised by the fact that it further includes a motor (221; 321) fixed to the fixed casing (201; 301, 302), with its output shaft (222; 322) being coupled to the driving shaft portion (204; 304), whereby the said motor, when energised, can provide power assistance.

3. A shaft drive according to Claim 2, characterised by the fact that the output shaft (204; 304) of the motor (221; 321) is coupled to the planet carrier (208; 308) of the epicyclic reduction gear train (203; 303).

4. A shaft drive according to Claim 3, characterised by the fact that the output shaft (204; 304) of the motor (221; 321) carries a toothed wheel (223; 323) meshing directly with a toothed crown (224; 324), which is provided on the periphery of the planet carrier (208; 308).

5. A shaft drive according to one of Claims 2 to 4, characterised by the fact that the motor (221; 321) is electric, and its control means is coupled to that of the actuating means (216; 316) associated with the crown (212; 312) of the epicyclic reduction gear train (204; 303), in such a way that the said motor is only energised when the said crown is coupled with the driven shaft portion (206; 306).

6. A shaft drive according to Claim 5, characterised by the fact that a supplementary clutch system or equivalent is associated with the electric motor (221; 321), whereby to relieve excessive inertia from the said motor when the latter is out of service.

7. A shaft drive according to one of Claims 1 to 6, characterised by the fact that the actuating means (116; 216) comprise essentially an electro-magnet (117; 217) secured to the fixed casing (101; 201), together with an electro-magnet (119; 219) fixed to the driven shaft portion (106; 206).

8. A shaft drive according to Claim 7, characterised by the fact that the electro-magnet (119; 219) that is fixed to the driven shaft portion (106; 206) is mounted on the periphery of a wheel (120; 220) fixed to the said portion, whereby the two electro-magnets (117, 119; 217, 219) are disposed on either side of an annular extension (115; 215) which is provided on the periphery of the crown (112; 212) of the epicyclic reduction gear train (103; 203).

9. A shaft drive according to one of Claims 1 to 6, characterised by the fact that the actuating means (316) comprise essentially an electro-magnet (317) fixed to the fixed casing (301, 302), together with a toothed coupling (326, 327) between the crown (312) of the epicyclic reduction gear train (303), the crown (312) being mounted for sliding movement on the driven shaft portion, and a toothed crown (320) fixed to the said driven shaft portion.

10. A shaft drive according to Claim 9, characterised by the fact that return means, such as a helical spring (328), are associated with the crown (312) of the epicyclic reduction gear train (303), and tend to apply the said crown against the toothed crown (320) which is fixed to the driven shaft portion, whereby automatically to couple the toothed crown (320) with the crown of the reduction gear train in low speed mode.

11. A shaft drive according to Claim 9 or Claim 10, characterised by the fact that the toothed coupling comprises annular sets (326, 327) of annular teeth, such that they can yield by relative sliding of the said matching sets of teeth in the event that the driven portion (306) becomes blocked.

12. A shaft drive according to one of Claims 1 to 11, characterised by the fact that it comprises a plurality of identical shaft drives (100; 200; 300) arranged to be coupled together in series, whereby to obtain more than two speed reductions between the first input shaft portion and the final output shaft portion.

13. A shaft drive according to one of Claims 1 to 12, being part of the power assisted steering system of a motor vehicle, and in which the driving shaft portion is a steering column on the steering wheel side, while the driven shaft portion is a steering shaft on the road wheel side, characterised by the fact that the actuating means (116; 216; 316), acting on the crown (112; 212; 312) of the epicyclic reduction gear train (103; 203; 303), selectively couple the said crown according to the speed of the vehicle in relation to a predetermined low speed, whereby power assistance is only provided when the speed of the vehicle is below the said predetermined low speed.

FIG_1

FIG_2

FIG_3